(19)

Europäisches Patentamt

European Patent Office

Office européen des brevets

(11) **EP 4 167 320 A1**

# (12) EUROPEAN PATENT APPLICATION
published in accordance with Art. 153(4) EPC

(43) Date of publication:
**19.04.2023 Bulletin 2023/16**

(21) Application number: **21822808.8**

(22) Date of filing: **09.06.2021**

(51) International Patent Classification (IPC):
$H01M\ 4/40^{(2006.01)}$    $H01M\ 4/48^{(2010.01)}$
$H01M\ 4/485^{(2010.01)}$    $H01M\ 4/505^{(2010.01)}$
$H01M\ 4/525^{(2010.01)}$    $H01M\ 4/58^{(2010.01)}$
$H01M\ 4/587^{(2010.01)}$    $H01M\ 4/62^{(2006.01)}$
$H01M\ 10/052^{(2010.01)}$    $H01M\ 10/0562^{(2010.01)}$
$H01B\ 1/06^{(2006.01)}$    $H01B\ 1/08^{(2006.01)}$

(52) Cooperative Patent Classification (CPC):
H01B 1/06; H01B 1/08; H01M 4/40; H01M 4/48;
H01M 4/485; H01M 4/505; H01M 4/525;
H01M 4/58; H01M 4/587; H01M 4/62;
H01M 10/052; H01M 10/0562; Y02E 60/10;
Y02P 70/50

(86) International application number:
**PCT/JP2021/021833**

(87) International publication number:
**WO 2021/251407 (16.12.2021 Gazette 2021/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.06.2020 JP 2020100589**

(71) Applicant: **Showa Denko K.K.
Tokyo 105-8518 (JP)**

(72) Inventors:
• **SEI, Ryosuke
Tokyo 105-8518 (JP)**
• **LEE, Kunchan
Tokyo 105-8518 (JP)**

(74) Representative: **Strehl Schübel-Hopf & Partner
Maximilianstrasse 54
80538 München (DE)**

## (54) SOLID ELECTROLYTE MATERIAL, SOLID ELECTROLYTE, SOLID ELECTROLYTE PRODUCTION METHOD, AND ALL-SOLID-STATE BATTERY

(57) One embodiment of the present invention relates to a solid electrolyte material, a solid electrolyte, a method for producing the solid electrolyte, or an all-solid-state battery, and the solid electrolyte material includes lithium, tantalum, phosphorus, and oxygen as constituent elements and includes at least one element selected from boron, niobium, silicon, and bismuth as a constituent element, and is amorphous.

EP 4 167 320 A1

**Description**

Technical Field

One embodiment of the present invention relates to a solid electrolyte material, a solid electrolyte, a method for producing the solid electrolyte, or an all-solid-state battery.

Background Art

In recent years, there has been a demand for the development of a high output and high capacity battery as a power source for, for example, a notebook computer, a tablet terminal, a cellphone, a smartphone or an electric vehicle (EV). Among these, an all-solid-state battery using a solid electrolyte instead of a liquid electrolyte such as an organic solvent has attracted attention as a battery having excellent charge/discharge efficiency, charging speed, safety, and productivity.

As the solid electrolyte, an inorganic solid electrolyte has attracted attention, and as the inorganic solid electrolyte, oxide and sulfide solid electrolytes are mainly known.

When a sulfide solid electrolyte is used, there are advantages such as being able to manufacture a battery by, for example, cold pressing, but it is unstable to humidity and harmful hydrogen sulfide gas may be generated, and thus from the viewpoint of, for example, safety, the development of an oxide solid electrolyte is underway.

Non Patent Literature 1 discloses that as such an oxide solid electrolyte, $LiTa_2PO_8$, which has a monoclinic crystal structure, exhibits a high lithium ion conductivity (total conductivity (25°C): $2.5 \times 10^{-4}$ S·cm$^{-1}$).

Citation List

Non Patent Literature

Non Patent Literature 1: J. Kim et al., J. Mater. Chem. A, 2018, 6, p22478-22482

Summary of Invention

Technical Problem

An oxide solid electrolyte has an extremely high grain boundary resistance, and in order to obtain an ion conductivity that allows use thereof in an all-solid-state battery, a powder of the solid electrolyte needs to be not only compression molded, but also formed into a high density sintered body. Then, in order to obtain such a high density sintered body, the solid electrolyte needs to be fired at a high temperature of, for example, about 1100°C.

In addition, when manufacturing an all-solid-state battery using an oxide solid electrolyte, in order to obtain a high ion conductivity, the solid electrolyte needs to be sintered together with, for example, a positive electrode material and a negative electrode material.

When firing the same, it is desired to obtain a sintered body having a high ion conductivity even when firing at a low temperature (e.g., 900°C or less) in order to suppress, for example, decomposition, and alteration in quality of another material such as a positive electrode or negative electrode material in terms of economic efficiency and equipment, but when $LiTa_2PO_8$ disclosed in Non Patent Literature 1 is fired at a low temperature, it is not possible to obtain a sintered body exhibiting a sufficient ion conductivity.

One embodiment of the present invention provides a solid electrolyte material that can allow a sintered body having a sufficient ion conductivity to be obtained even when fired at a low temperature (e.g., 900°C or less).

Solution to Problem

The present inventors have carried out diligent studies and as a result, have found that the above problem can be solved according to the following configuration examples, and have completed the present invention.

The configuration examples of the present invention are as follows.

[1] A solid electrolyte material that is amorphous, comprising lithium, tantalum, phosphorus, and oxygen as constituent elements and comprising at least one element selected from boron, niobium, silicon, and bismuth as a constituent element.

[2] The solid electrolyte material according to [1], wherein a content of the tantalum element is 10.6 to 16.6 atomic %.

[3] The solid electrolyte material according to [1] or [2], wherein a content of the phosphorus element is 5.3 to 8.8 atomic %.

[4] The solid electrolyte material according to any of [1] to [3], wherein a content of the lithium element is 5.0 to 20.0 atomic %.

[5] The solid electrolyte material according to any of [1] to [4], wherein a content of the boron element is 0.1 to 5.0 atomic %.

[6] The solid electrolyte material according to any of [1] to [5], wherein a content of the niobium element is 0.1 to 5.0 atomic %.

[7] The solid electrolyte material according to any of [1] to [6], wherein a content of the silicon element is 0.1 to 5.0 atomic %.

[8] The solid electrolyte material according to any of [1] to [7], wherein a content of the bismuth element is 0.1 to 5.0 atomic %.

[9] The solid electrolyte material according to any of [1] to [8], wherein the solid electrolyte material comprises one or more elements selected from the group consisting of Zr, Ga, Sn, Hf, W, Mo, Al, and Ge as a constituent element.

[10] A solid electrolyte obtained by using the solid electrolyte material according to any of [1] to [9].

[11] A solid electrolyte which is a sintered body of the solid electrolyte material according to any of [1] to [9].

[12] A method for producing the solid electrolyte according to [10] or [11], comprising a step of firing the solid electrolyte material according to any of [1] to [9] at 500 to 900°C.

[13] An all-solid-state battery, comprising:

a positive electrode having a positive electrode active material;
a negative electrode having a negative electrode active material; and
a solid electrolyte layer between the positive electrode and the negative electrode, wherein
the solid electrolyte layer comprises the solid electrolyte according to [10] or [11].

[14] The all-solid-state battery according to [13], wherein the positive electrode active material comprises one or more compounds selected from the group consisting of $LiM3PO_4$ [where M3 is one or more elements selected from the group consisting of Mn, Co, Ni, Fe, Al, Ti, and V, or two elements V and O], $LiM5VO_4$ [where M5 is one or more elements selected from the group consisting of Fe, Mn, Co, Ni, Al, and Ti, $Li_2M6P_2O_7$ [where M6 is one or more elements selected from the group consisting of Fe, Mn, Co, Ni, Al, Ti, and V, or two elements V and O], $LiVP_2O_7$, $Li_{x7}V_{y7}M7_{z7}$ [where $2 \leq x7 \leq 4$, $1 \leq y7 \leq 3$, $0 \leq z7 \leq 1$, $1 \leq y7 + z7 \leq 3$, and M7 is one or more elements selected from the group consisting of Ti, Ge, Al, Ga, and Zr], $Li_{1+x8}Al_{x8}M8_{2-x8}(PO_4)_3$ [where $0 \leq x8 \leq 0.8$, and M8 is one or more elements selected from the group consisting of Ti and Ge], $LiNi_{1/3}Co_{1/3}Mn_{1/3}O_2$, $LiCoO_2$, $LiNiO_2$, $LiMn_2O_4$, $Li_2CoP_2O_7$, $Li_3V_2(PO_4)_3$, $Li_3Fe_2(PO_4)_3$, $LiNi_{0.5}Mn_{1.5}O_4$, and $Li_4Ti_5O_{12}$.

[15] The all-solid-state battery according to [13] or [14], wherein the negative electrode active material comprises one or more compounds selected from the group consisting of $LiM3PO_4$ [where M3 is one or more elements selected from the group consisting of Mn, Co, Ni, Fe, Al, Ti, and V, or two elements V and O], $LiM5VO_4$ [where M5 is one or more elements selected from the group consisting of Fe, Mn, Co, Ni, Al, and Ti], $Li_2M6P_2O_7$ [where M6 is one or more elements selected from the group consisting of Fe, Mn, Co, Ni, Al, Ti, and V, or two elements V and O, $LiVP_2O_7$, $Li_{x7}V_{y7}M7_{z7}$ [where $2 \leq x7 \leq 4$, $1 \leq y7 \leq 3$, $0 \leq z7 \leq 1$, $1 \leq y7 + z7 \leq 3$, and M7 is one or more elements selected from the group consisting of Ti, Ge, Al, Ga, and Zr], $Li_{1+x8}Al_{x8}M8_{2-x8}(PO_4)_3$ [where $0 \leq x8 \leq 0.8$, and M8 is one or more elements selected from the group consisting of Ti and Ge], $(Li_{3-a9x9+(5-b9)y9}M9_{x9})(V_{1-y9}M10_{y9})O_4$ [where M9 is one or more elements selected from the group consisting of Mg, Al, Ga, and Zn, M10 is one or more elements selected from the group consisting of Zn, Al, Ga, Si, Ge, P, and Ti, $0 \leq x9 \leq 1.0$, $0 \leq y9 \leq 0.6$, a9 is an average valence of M9, and b9 is an average valence of M10], $LiNb_2O_7$, $Li_4Ti_5O_{12}$, $Li_4Ti_5PO_{12}$, $TiO_2$, LiSi, and graphite.

[16] The all-solid-state battery according to any of [13] to [15], wherein the positive electrode and the negative electrode comprise the solid electrolyte according to [10] or [11] .

Advantageous Effects of Invention

According to one embodiment of the present invention, it is possible to obtain a sintered body having a sufficient ion conductivity, particularly a sufficient lithium ion conductivity, even when firing at a low temperature (e.g., 900°C or less). Therefore, by using the solid electrolyte material according to one embodiment of the present invention, it is possible to easily manufacture an all-solid-state battery including a solid electrolyte having a sufficient ion conductivity while having excellent economic efficiency and suppressing, for example, decomposition, and alteration in quality of another material such as a positive electrode or negative electrode material.

Brief Description of Drawings

[Figure 1] Figure 1 shows an XRD pattern of the solid electrolyte material obtained in Example 3.
[Figure 2] Figure 2 shows an XRD pattern of the solid electrolyte material obtained in Example 27.
[Figure 3] Figure 3 shows an XRD pattern of the solid electrolyte material obtained in Comparative Example 3.
[Figure 4] Figure 4 shows a result of fitting a diffraction peak having the maximum intensity in the range of $20° \leq 2\theta \leq 40°$, in the XRD pattern of the solid electrolyte material obtained in Example 3.
[Figure 5] Figure 5 shows a result of fitting a diffraction peak having the maximum intensity in the range of $20° \leq 2\theta \leq 40°$, in the XRD pattern of the solid electrolyte material obtained in Example 27.
[Figure 6] Figure 6 shows a result of fitting a diffraction peak having the maximum intensity in the range of $20° \leq 2\theta \leq 40°$, in the XRD pattern of the solid electrolyte material obtained in Comparative Example 3.

Description of Embodiments

<<Solid electrolyte material>>

The solid electrolyte material according to one embodiment of the present invention (hereinafter, also referred to as "the present material") is amorphous, and includes lithium, tantalum, phosphorus, and oxygen as constituent elements and includes at least one element selected from boron, niobium, silicon, and bismuth as a constituent element.

The present material is amorphous. For example, if no peak is observed (a broad peak is observed) in an X-ray diffraction (XRD) pattern, that is, the half-width of a diffraction peak having the maximum intensity observed in the range of $20° \leq 2\theta \leq 40°$ is larger than 0.15°, it can be determined that the present material is amorphous. In other words, when the half-width of the diffraction peak is 0.15° or less, it is determined that the present material is crystalline.

When the present material is amorphous, the solid electrolyte obtained from the present material, particularly the solid electrolyte (sintered body) obtained by firing the present material, tends to exhibit a higher ion conductivity.

For example the shape, and size of the present material are not particularly limited, and the present material is preferably in the form of a particle (powder), and the average particle size (D50) of the present material is preferably 0.1 to 10 $\mu$m and more preferably 0.1 to 5 $\mu$m.

When the average particle size of the present material is in the above range, the solid electrolyte obtained from the present material, particularly the solid electrolyte (sintered body) obtained by firing the present material, tends to exhibit a higher ion conductivity.

The elements constituting the present material are not particularly limited as long as the present material includes lithium, tantalum, phosphorus, and oxygen and further includes at least one element selected from boron, niobium, silicon, and bismuth, and the present material preferably includes lithium, tantalum, phosphorus, boron, and oxygen from the viewpoint of, for example, being able to further lower the firing temperature when obtaining a sintered body having a sufficient ion conductivity.

In addition, the present material may include one or more elements selected from the group consisting of Zr, Ga, Sn, Hf, W, Mo, Al, and Ge as an element constituting the present material.

The content of the lithium element in the present material is preferably 5.0 to 20.0 atomic % and more preferably 9.0 to 15.0 atomic %, from the viewpoint of, for example, being able to easily obtain a solid electrolyte having a higher lithium ion conductivity.

The content of each element in the present material can be measured, for example, by the absolute intensity quantification method of Auger electron spectroscopy (AES) using a standard powder sample containing Mn, Co, and Ni in a proportion of 1:1:1 as a lithium-containing transition metal oxide such as $LiCoO_2$. In addition thereto, the content thereof can be determined by a conventionally known quantitative analysis. For example, the content of each element in the present material can be determined using a high frequency inductively coupled plasma (ICP) emission spectrometer after adding an acid to a sample for thermal decomposition and then adjusting the volume of the thermal decomposition product.

The content of the tantalum element in the present material is preferably 10.6 to 16.6 atomic % and more preferably 11.0 to 16.0 atomic %, from the viewpoint of, for example, being able to easily obtain a solid electrolyte having a higher lithium ion conductivity.

The content of the phosphorus element in the present material is preferably 5.3 to 8.8 atomic % and more preferably 5.8 to 8.3 atomic %, from the viewpoint of, for example, being able to easily obtain a solid electrolyte having a higher lithium ion conductivity.

When the present material includes the boron element, the content of the boron element in the present material is preferably 0.1 to 5.0 atomic % and more preferably 0.5 to 3.0 atomic %, from the viewpoint of, for example, being able to further lower the firing temperature when obtaining a sintered body having a sufficient ion conductivity.

When the present material includes the niobium element, the content of the niobium element in the present material is preferably 0.1 to 5.0 atomic % and more preferably 0.5 to 3.0 atomic %, from the viewpoint of, for example, being able to further lower the firing temperature when obtaining a sintered body having a sufficient ion conductivity.

When the present material includes the silicon element, the content of the silicon element in the present material is preferably 0.1 to 5.0 atomic % and more preferably 0.5 to 3.0 atomic %, from the viewpoint of, for example, being able to further lower the firing temperature when obtaining a sintered body having a sufficient ion conductivity.

When the present material includes the bismuth element, the content of the bismuth element in the present material is preferably 0.1 to 5.0 atomic % and more preferably 0.1 to 2.0 atomic %, from the viewpoint of, for example, being able to further lower the firing temperature when obtaining a sintered body having a sufficient ion conductivity.

When the present material includes one or more elements selected from the group consisting of Zr, Ga, Sn, Hf, W, Mo, Al and Ge, the content of each of these elements in the present material is preferably 0.1 to 5.0 atomic % and more preferably 0.1 to 3.0 atomic %, from the viewpoint that for example, it tends to be able to easily obtain a solid electrolyte having a higher ion conductivity.

<Method for producing the present material>

The present material is preferably produced as a component (Z) including lithium, tantalum, phosphorus, and oxygen as constituent elements and including at least one element selected from boron, niobium, silicon, and bismuth as a constituent element, for example, by a method (I) including a pulverization step of pulverizing a material to be pulverized including lithium, tantalum, phosphorus, and oxygen as constituent elements and including at least one element selected from boron, niobium, silicon, and bismuth as a constituent element.

In the pulverization step, pulverization and mixing are carried out such that the present material obtained is made amorphous by a mechanochemical reaction. In addition, in this case, pulverization and mixing are preferably carried out such that the average particle size of the present material is in the above range.

Examples of the pulverization step include a pulverizing method using, for example, a roll tumbling mill, a ball mill, a small diameter ball mill (bead mill), a medium stirring mill, an air flow pulverizer, a mortar, an automatic kneading mortar, a tank crusher, or a jet mill. Among these, a pulverizing method using a ball mill or a bead mill is preferable, and a pulverizing method using a ball mill using a ball having a diameter of 0.1 to 10 mm is more preferable, from the viewpoint of, for example, being able to easily obtain a solid electrolyte exhibiting a higher ion conductivity when a solid electrolyte is obtained from the present material.

The time of the pulverization step is preferably 0.5 to 48 hours and more preferably 2 to 48 hours, from the viewpoint of, for example, being able to easily obtain the present material that is amorphous and has an average particle size in the above range.

In the pulverization step, the mixing may be carried out while the pulverization is carried out while carrying out heating if necessary, and the pulverization step is usually carried out at room temperature.

In addition, the pulverization step may be carried out in the atmosphere, and is preferably carried out in an atmosphere of nitrogen gas and/or argon gas in which the oxygen gas content is adjusted in the range of 0 to 20% by volume.

The raw material used for the material to be pulverized is preferably an inorganic compound from the viewpoint of ease of handling.

The raw material may be produced and obtained by a conventionally known method, or a commercially available product may be used as the raw material.

Examples of the method (I) include a method (i) using a compound including a lithium atom, a compound including a tantalum atom, a compound including a phosphorus atom, and further at least one compound selected from a compound including a boron atom, a compound including a niobium atom, a compound including a silicon atom, and a compound including a bismuth atom, as the material to be pulverized.

Examples of the compound including a lithium atom include lithium carbonate ($Li_2CO_3$), lithium oxide ($Li_2O$), lithium hydroxide (LiOH), lithium acetate ($LiCH_3COO$), and hydrates thereof. Among these, lithium carbonate, lithium hydroxide, and lithium acetate are preferable in that these are easily decomposed and reacted.

As the compound including a lithium atom, one may be used, or two or more may be used.

Examples of the compound including a tantalum atom include tantalum pentoxide ($Ta_2O_5$) and tantalum nitrate ($Ta(NO_3)_5$). Among these, tantalum pentoxide is preferable from the viewpoint of cost.

As the compound including a tantalum atom, one may be used, or two or more may be used.

As the compound including a phosphorus atom, a phosphate is preferable, and examples of the phosphate include diammonium hydrogen phosphate (($NH_4)_2HPO_4$) and monoammonium dihydrogen phosphate ($NH_4H_2PO_4$) in that these are easily decomposed and reacted.

As the compound including a phosphorus atom, one may be used, or two or more may be used.

Examples of the compound including a boron atom include $LiBO_2$, $LiB_3O_5$, $Li_2B_4O_7$, $Li_3B_{11}O_{18}$, $Li_3BO_3$, $Li_3B_7O_{12}$, $Li_4B_2O_5$, $Li_6B_4O_9$, $Li_{3-x5}B_{1-x5}C_{x5}O_3$ (0 < x5 <1), $Li_{4-x6}B_{2-x6}C_{x6}O_5$ (0 < x6 <2), $Li_{2.4}Al_{0.2}BO_3$, $Li_{2.7}Al_{0.1}BO_3$, $B_2O_3$, and $H_3BO_3$.

As the compound including a boron atom, one may be used, or two or more may be used.

Examples of the compound including a niobium atom include $Nb_2O_5$, $LiNbO_3$, $LiNb_3O_8$, and $NbPOs$.

As the compound including a niobium atom, one may be used, or two or more may be used.

Examples of the compound including a silicon atom include $SiO_2$, $Li_2SiO_3$, $Li_2Si_2O_5$, $Li_2Si_3O_7$, $Li_4SiO_4$, $Li_6Si_2O_7$, and $Li_8SiO_6$.

As the compound including a silicon atom, one may be used, or two or more may be used.

Examples of the compound including a bismuth atom include $LiBiO_2$, $Li_3BiO_3$, $Li_4Bi_2O_5$, $Li_{2.4}Al_{0.2}BiO_3$, and $Bi_2O_3$.

As the compound including a bismuth atom, one may be used, or two or more may be used.

When the present material includes one or more elements M1 selected from the group consisting of Zr, Ga, Sn, Hf, W, and Mo, and/or when the present material includes one or more elements M2 selected from the group consisting of Al and Ge, there is a method (i') using a compound including a lithium atom, a compound including a tantalum atom, a compound including a phosphorus atom, at least one compound selected from a compound including a boron atom, a compound including a niobium atom, a compound including a silicon atom, and a compound including a bismuth atom, and further a compound including the elements M1 and/or a compound including the elements M2 as the material to be pulverized.

The compound including the elements M1 is not particularly limited, and an inorganic compound is preferable from the viewpoint of ease of handling, and examples thereof include an oxide and a nitrate of M1. Among these, an oxide is preferable from the viewpoint of cost.

As the compound including M1, one may be used, or two or more may be used.

When M1 is Ga or Sn, examples of the oxide thereof include gallium oxide ($Ga_2O_3$) and tin oxide ($SnO_2$), respectively.

When M1 is Zr, Hf, W, or Mo, examples of the oxide thereof include zirconium oxide ($ZrO_2$), hafnium oxide ($HfO_2$), tungsten oxide ($WO_3$), and molybdenum oxide ($MoO_3$), respectively. When M1 is Zr, Hf, W, or Mo, in addition to the oxide thereof, zirconium hydroxide ($Zr(OH)_4$), hafnium hydroxide ($Hf(OH)_4$), tungstic acid ($H_2WO_4$), and molybdic acid ($H_2MoO_4$) can also be used from the viewpoint of ease of reaction.

The compound including the elements M2 is not particularly limited, and an inorganic compound is preferable from the viewpoint of ease of handling, and examples thereof include an oxide of M2.

As the compound including the elements M2, one may be used, or two or more may be used.

When M2 is Ge or Al, examples of the oxide thereof include germanium oxide ($GeO_2$) and aluminum oxide ($Al_2O_3$), respectively.

For the mixing ratio of the raw materials, these may be mixed, for example, in amounts such that the content of each constituent element in the present material obtained is in the above range.

In the firing step described later, a lithium atom is likely to flow out of the system, and thus the compound including a lithium atom may be excessively used by about 10 to 20%.

In addition, in the firing step described later, in order to suppress the generation of a by-product, the compound including a phosphorus atom may be excessively used by about 1 to 10%.

In the method (i) and the method (i'), each raw material may be mixed in advance before the pulverization step, and each raw material is preferably mixed while pulverized (pulverized and mixed) in the pulverization step.

Examples of the method (I) also include a method (ii) using a compound (a) including lithium, tantalum, phosphorus, and oxygen as constituent elements and at least one compound (b) selected from a boron compound, a niobium compound, a silicon compound, and a bismuth compound, as the material to be pulverized or a method (iii) using a compound (c) including lithium, tantalum, phosphorus, and oxygen as constituent elements and including at least one element selected from boron, niobium, silicon, and bismuth as a constituent element, as the material to be pulverized.

In addition, in the methods (ii) and (iii), a compound including the elements M1 and/or a compound including the elements M2 may be further used.

In the method (ii), the compound (a) and the compound (b) may be mixed in advance before the pulverization step, and the compound (a) and the compound (b) are preferably mixed while pulverized (pulverized and mixed) in the pulverization step.

• Compound (a)

The compound (a) is a compound including lithium, tantalum, phosphorus, and oxygen as constituent elements, is preferably an oxide including these elements, and is more preferably a lithium ion conductive compound including these elements.

As the compound (a) used in the method (ii), one may be used, or two or more may be used.

The compound (a) is preferably a compound having a monoclinic structure. Whether the compound (a) has a monoclinic structure can be determined, for example, by Rietveld analysis of an X-ray diffraction (XRD) pattern of the compound (a), specifically by the method of the following Examples.

Specific examples of the compound (a) include a compound (a1) that includes lithium, tantalum, phosphorus, and oxygen as constituent elements, and may further include one or more elements M1 selected from the group consisting of Zr, Ga, Sn, Hf, W, and Mo, and a compound (a2) that includes lithium, tantalum, phosphorus, and oxygen as constituent elements, and may further include one or more elements M2 selected from the group consisting of Al and Ge. Among these, the compound (a) is preferably a compound consisting only of lithium, tantalum, phosphorus, and oxygen as constituent elements, and more preferably $LiTa_2PO_8$, from the viewpoint of, for example, exerting the advantageous effects of the present invention more.

The compound (a1) is preferably $LiTa_2PO_8$ or a compound obtained by replacing a part of Ta of $LiTa_2PO_8$ with the element(s) M1, and preferably has a monoclinic structure.

The compound (a1) is specifically preferably a compound represented by the composition formula $Li_{[1+(5-a)x]}Ta_{2-x}M1_xPO_8$ [where M1 is one or more elements selected from the group consisting of Zr, Ga, Sn, Hf, W, and Mo, $0.0 \leq x < 1.0$, and a is an average valence of M1].

W and Mo are more preferable, and W is further preferable as M1, from the viewpoint of, for example, increasing the lithium ion conductivity at a crystal grain boundary in the solid electrolyte obtained by using the compound (a).

The x is preferably 0.95 or less, more preferably 0.90 or less, further preferably 0.85 or less, more preferably 0.80 or less, and particularly preferably 0.75 or less.

When x is in the above range, the lithium ion conductivity at a crystal grain boundary tends to be high in the solid electrolyte obtained by using the compound (a).

Depending on the valence and content of M1, the amount of Li varies according to the average valence of M1 such that the charge neutrality of the compound (a) described above can be obtained. The average valence represented by the a can be determined as follows. When M1 is composed of two or more elements, the a is calculated by weighted averaging using the valence of each element and the content of each element. For example, when M1 is composed of 80 atomic % Nb and 20 atomic % Zr, a is calculated as $(+5 \times 0.8) + (+4 \times 0.2) = +4.8$. In addition, when M1 is composed of 80 atomic % Nb and 20 atomic % W, a is calculated as $(+5 \times 0.8) + (+6 \times 0.2) = +5.2$.

The compound (a2) is preferably $LiTa_2PO_8$ or a compound obtained by replacing a part of P of $LiTa_2PO_8$ with the element(s) M2, and preferably has a monoclinic structure.

The compound (a2) is specifically preferably a compound represented by the composition formula $Li_{[1+(5-b)y]}Ta_2P_{1-y}M2_yO_8$ [where M2 is one or more elements selected from the group consisting of Al and Ge, $0.0 \leq y < 0.7$, and b is an average valence of M2].

Al is more preferable as M2, from the viewpoint of, for example, increasing the lithium ion conductivity at a crystal grain boundary in the solid electrolyte obtained by using the compound (a).

The y is preferably 0.65 or less, more preferably 0.60 or less, and further preferably 0.55 or less.

When y is in the above range, the total ion conductivity, which is the sum of the lithium ion conductivity within a crystal grain and the lithium ion conductivity at a crystal grain boundary, tends to be high in the solid electrolyte obtained by using the compound (a).

The average valence represented by the b can be determined in the same manner as in the method for calculating the average valence a described above.

The method for producing the compound (a) is not particularly limited, and for example, a conventionally known production method such as a solid phase reaction or a liquid phase reaction can be adopted. Specific examples of the method for producing the compound (a) include a method including at least a mixing step and a firing step each in one stage.

Examples of the mixing step in the method for producing the compound (a) include a step of mixing a compound including a lithium atom (e.g., an oxide or a carbonate), a compound including a tantalum atom (e.g., an oxide or a nitrate), a compound including a phosphorus atom (e.g., an ammonium salt), and, if necessary, a compound including the elements M1 (e.g., an oxide) and/or a compound including the elements M2 (e.g., an oxide), which are raw materials.

As each of the raw materials, one may be used, or two or more may be used.

Examples of the method for mixing the raw materials include a mixing method using, for example, a roll tumbling mill, a ball mill, a small diameter ball mill (bead mill), a medium stirring mill, an air flow pulverizer, a mortar, an automatic kneading mortar, a tank crusher, or a jet mill.

For the mixing ratio of the raw materials, these may be mixed, for example, at a stoichiometric ratio so as to obtain a desired composition of the compound (a).

In the firing step described later, a lithium atom is likely to flow out of the system, and thus the compound including a lithium atom may be excessively used by about 10 to 20%. In addition, in the firing step described later, in order to suppress the generation of a by-product, the compound including a phosphorus atom may be excessively used by about 1 to 10%.

In the mixing, the mixing may be carried out while carrying out heating if necessary, and the mixing is usually carried out at room temperature.

In addition, the mixing may be carried out in the atmosphere, and is preferably carried out in an atmosphere of nitrogen gas and/or argon gas in which the oxygen gas content is adjusted in the range of 0 to 20% by volume.

In the firing step in the method for producing the compound (a), the mixture obtained in the mixing step is fired. When the firing step is carried out a plurality of times, a pulverization step using, for example, a ball mill, or a mortar may be provided for the purpose of pulverizing or reducing the particle size of the fired product obtained in the firing step. In particular, the compound (a) has a low reaction rate of phase formation, and thus a reaction intermediate may be present in the first firing. In this case, it is preferable to carry out the first firing, carry out the pulverization step, and then further carry out the firing step.

The firing step may be carried out in the atmosphere, and is preferably carried out in an atmosphere of nitrogen gas and/or argon gas in which the oxygen gas content is adjusted in the range of 0 to 20% by volume.

The firing temperature depends on the firing time, and is preferably 800 to 1200°C, more preferably 950 to 1100°C, and further preferably 950 to 1000°C.

When the firing temperature is in the above range, a lithium atom is less likely to flow out of the system, and the compound (a) having a high ion conductivity tends to be easily obtained.

The firing time (the total firing time when the firing step is carried out several times) depends on the firing temperature, and is preferably 1 to 16 hours and more preferably 3 to 12 hours.

When the firing time is in the above range, a lithium atom is less likely to flow out of the system, and a compound having a high ion conductivity tends to be easily obtained.

If the fired product obtained after the firing step is left in the atmosphere, the fired product may absorb moisture or react with carbon dioxide to alter in quality. Because of this, the fired product obtained after the firing step is preferably transferred into a dehumidified inert gas atmosphere and stored when the temperature thereof drops to 200°C or less in temperature lowering after the firing step.

• Compound (b)

The compound (b) is at least one compound selected from a boron compound, a niobium compound, a silicon compound, and a bismuth compound. Among these, a boron compound and a niobium compound are preferable, and a boron compound is more preferable, from the viewpoint of, for example, exerting the advantageous effects of the present invention more.

The compound (b) is a compound different from the compound (a).

As the compound (b) used in the method (ii), one may be used, or two or more may be used.

From the viewpoint of ease of handling, the compound (b) is preferably an inorganic compound, more preferably a compound including lithium or hydrogen as a constituent element, and further preferably a complex oxide including lithium as a constituent element.

The compound (b) may be produced and obtained by a conventionally known method, or a commercially available product may be used as the compound (b).

The compound (b) is preferably a crystalline compound. Whether the compound (b) is a crystalline compound can be determined, for example, from an X-ray diffraction (XRD) pattern of the compound (b).

Examples of the boron compound include $LiBO_2$, $LiB_3O_5$, $Li_2B_4O_7$, $Li_3B_{11}O_{18}$, $Li_3BO_3$, $Li_3B_7O_{12}$, $Li_4B_2O_5$, $Li_6B_4O_9$, $Li_{3-x5}B_{1-x5}C_{x5}O_3$ (0 < x5 <1), $Li_{4-x6}B_{2-x6}C_{x6}O_5$ (0 < x6 <2), $Li_{2.4}Al_{0.2}BO_3$, $Li_{2.7}Al_{0.1}BO_3$, $B_2O_3$, and $H_3BO_3$.

Examples of the niobium compound include $Nb_2O_5$, $LiNbO_3$, $LiNb_3O_8$, and $NbPOs$.

Examples of the silicon compound include $SiO_2$, $Li_2SiO_3$, $Li_2Si_2O_5$, $Li_2Si_3O_7$, $Li_4SiO_4$, $Li_6Si_2O_7$, and $Li_8SiO_6$.

Examples of the bismuth compound include $LiBiO_2$, $Li_3BiO_3$, $Li_4Bi_2O_5$, $Li_{2.4}Al_{0.2}BiO_3$, and $Bi_2O_3$.

The method for producing the compound (b) is not particularly limited, and for example, a conventionally known production method such as a solid phase reaction or a liquid phase reaction can be adopted. Specific examples of the method for producing the compound (b) include a method including a mixing step and a firing step.

A commercially available product may be used as the compound (b).

• Mixing step

In the mixing step, for example, when producing a complex oxide including lithium as a constituent element, a compound including a lithium atom and a compound including a boron atom, a compound including a niobium atom, a compound including a silicon atom, or a compound including a bismuth atom, which are raw materials, are mixed.

Depending on the type of the compound (b), this mixing step may not be carried out.

The compound including a lithium atom is not particularly limited, and an inorganic compound is preferable from the viewpoint of ease of handling, and examples of the inorganic compound including a lithium atom include lithium carbonate ($Li_2CO_3$), lithium oxide ($Li_2O$), lithium hydroxide (LiOH), lithium acetate ($LiCH_3COO$), and hydrates thereof. Among these, lithium carbonate is preferable in that this is easily decomposed and reacted. In addition, it is also preferable to use lithium hydroxide monohydrate ($LiOH \cdot H_2O$).

As the compound including a lithium atom, one may be used, or two or more may be used.

The compound including a boron atom is not particularly limited, and an inorganic compound is preferable from the viewpoint of ease of handling, and examples of the inorganic compound including a boron atom include boric acid ($H_3BO_3$) and boron oxide ($B_2O_3$). Among these, boric acid is preferable.

As the compound including a boron atom, one may be used, or two or more may be used.

Examples of the compound including a niobium atom include $Nb_2O_5$, $LiNbO_3$, $LiNb_3O_8$, and $NbPO_5$.

As the compound including a niobium atom, one may be used, or two or more may be used.

Examples of the compound including a silicon atom include $SiO_2$, $Li_2SiO_3$, $Li_2Si_2O_5$, $Li_2Si_3O_7$, $Li_4SiO_4$, $Li_6Si_2O_7$, and $Li_8SiO_6$.

As the compound including a silicon atom, one may be used, or two or more may be used.

The compound including a bismuth atom is not particularly limited, and an inorganic compound is preferable from the viewpoint of ease of handling, and examples of the inorganic compound including a bismuth atom include bismuth oxide and bismuth nitrate ($Bi(NO_3)_3$). Among these, bismuth oxide is preferable.

As the compound including a bismuth atom, one may be used, or two or more may be used.

Examples of the method for mixing the raw materials include a mixing method using, for example, a roll tumbling mill, a ball mill, a small diameter ball mill (bead mill), a medium stirring mill, an air flow pulverizer, a mortar, an automatic kneading mortar, a tank crusher, or a jet mill.

For the mixing ratio of the raw materials, these may be mixed, for example, at a stoichiometric ratio so as to obtain a desired composition of the compound (b).

In the firing step described later, a lithium atom is likely to flow out of the system, and thus the compound including a lithium atom may be excessively used by about 10 to 20%.

In the mixing, the mixing may be carried out while carrying out heating if necessary, and the mixing is usually carried out at room temperature.

In addition, the mixing may be carried out in the atmosphere, and is preferably carried out in an atmosphere of nitrogen gas and/or argon gas in which the oxygen gas content is adjusted in the range of 0 to 20% by volume.

• Firing step

In the firing step, the mixture obtained in the mixing step is fired. When the firing step is carried out a plurality of times, a pulverization step using, for example, a ball mill, or a mortar may be provided for the purpose of pulverizing or reducing the particle size of the fired product obtained in the firing step.

The firing step may be carried out in the atmosphere, and is preferably carried out in an atmosphere of nitrogen gas and/or argon gas in which the oxygen gas content is adjusted in the range of 0 to 20% by volume.

The firing temperature depends on the firing time, and is preferably 400 to 1000°C and more preferably 500 to 900°C.

When the firing temperature is in the above range, a lithium atom is less likely to flow out of the system, and the desired compound (b) tends to be easily obtained.

The firing time (the total firing time when the firing step is carried out several times) depends on the firing temperature, and is preferably 1 to 48 hours and more preferably 3 to 24 hours.

When the firing time is in the above range, a lithium atom is less likely to flow out of the system, and the desired compound (b) tends to be easily obtained.

If the fired product obtained after the firing step is left in the atmosphere, the fired product may absorb moisture or react with carbon dioxide to alter in quality. Because of this, the fired product obtained after the firing step is preferably transferred into a dehumidified inert gas atmosphere and stored when the temperature thereof drops to 200°C or less in temperature lowering after the firing step.

In the method (ii), it is preferable to use the compound (a) and the compound (b) in amounts such that the content of each constituent element in the present material obtained is in the above range.

• Compound (c)

The compound (c) is a compound including lithium, tantalum, phosphorus, and oxygen as constituent elements and including at least one element selected from boron, niobium, silicon, and bismuth, and is preferably an oxide including these elements, and more preferably a lithium ion conductive compound including these elements.

The compound (c) may include one or more elements selected from the group consisting of Zr, Ga, Sn, Hf, W, Mo, Al, and Ge.

The compound (c) is preferably a compound having a monoclinic structure. Whether the compound (c) has a monoclinic structure can be determined, for example, by Rietveld analysis of an X-ray diffraction (XRD) pattern of the compound (c), specifically by the method of the following Examples.

The method for producing the compound (c) is not particularly limited, and for example, a conventionally known production method such as a solid phase reaction or a liquid phase reaction can be adopted. Specific examples of the method for producing the compound (c) include a method including at least a mixing step and a firing step each in one stage.

Examples of the mixing step in the method for producing the compound (c) include a step of mixing a compound including a lithium atom (e.g., an oxide, a hydroxide, or a carbonate), a compound including a tantalum atom (e.g., an oxide or a nitrate), a compound including a phosphorus atom (e.g., an ammonium salt), and at least one compound selected from a compound including a boron atom (e.g., an oxide), a compound including a niobium atom (e.g., an oxide or a nitrate), a compound including a silicon atom (e.g., an oxide), and a compound including a bismuth atom (e.g., an oxide), which are raw materials. The compound (b) may be used as each of the compound including a boron atom, the compound including a niobium atom, the compound including a silicon atom, and the compound including a bismuth atom. As the compound including a boron atom, the compound including a niobium atom, the compound including a silicon atom, and the compound including a bismuth atom, the compound including a boron atom and the compound including a niobium atom are preferable from the viewpoint of, for example, exerting the advantageous effects of the present invention more.

As each of the raw materials, one may be used, or two or more may be used.

For the mixing ratio of the raw materials, these may be mixed, for example, in amounts such that the content of each constituent element in the present material obtained is in the above range.

In the firing step described later, a lithium atom is likely to flow out of the system, and thus the compound including a lithium atom may be excessively used by about 10 to 20%. In addition, in the firing step described later, in order to suppress the generation of a by-product, the compound including a phosphorus atom may be excessively used by about 1 to 10%.

Examples of the method for mixing the raw materials and the conditions (for example temperature, and atmosphere) at the time of mixing include the same method and conditions as in the mixing step when producing the compound (a).

In the firing step in the method for producing the compound (c), the mixture obtained in the mixing step is fired. When the firing step is carried out a plurality of times, a pulverization step using, for example, a ball mill, or a mortar may be provided for the purpose of pulverizing, or reducing the particle size of, the fired product obtained in the firing step, and the compound (c) has a high reaction rate of phase formation, as different from when producing the compound (a), and thus the desired compound (c) can be produced by carrying out the firing step once, and thus the compound (c) can preferably be produced by carrying out the firing step once.

Examples of the conditions (for example temperature, time, and atmosphere) in the firing step include the same conditions as in the firing step when producing the compound (a), and for the same reason as in the production of the compound (a), the fired product obtained after the firing step is preferably transferred into a dehumidified inert gas atmosphere and stored as when producing the compound (a).

<<Solid electrolyte>>

The solid electrolyte according to one embodiment of the present invention (hereinafter, also referred to as "the present electrolyte") is obtained by using the present material and is preferably a sintered body of the present material obtained by firing the present material.

The total ion conductivity of the sintered body of the present material obtained by firing the present material at 850°C or more and 900°C or less is preferably $2.00 \times 10^{-4}$ S·cm$^{-1}$ or more and more preferably $3.00 \times 10^{-4}$ S·cm$^{-1}$ or more.

The total ion conductivity of the sintered body of the present material obtained by firing the present material at 750°C or more and less than 850°C is preferably $1.00 \times 10^{-5}$ S·cm$^{-1}$ or more and more preferably $5.00 \times 10^{-5}$ S·cm$^{-1}$ or more.

The total ion conductivity of the sintered body of the present material obtained by firing the present material at 700°C or more and less than 750°C is preferably $1.00 \times 10^{-5}$ S·cm$^{-1}$ or more and more preferably $2.00 \times 10^{-5}$ S·cm$^{-1}$ or more.

The total ion conductivity of the sintered body of the present material obtained by firing the present material at 650°C or more and less than 700°C is preferably $1.00 \times 10^{-6}$ S·cm$^{-1}$ or more and more preferably $2.00 \times 10^{-6}$ S·cm$^{-1}$ or more.

When the total ion conductivity is in the above range, it can be deemed that the sintered body obtained by firing the present material at a low temperature has a sufficient ion conductivity.

Specifically, the total ion conductivity can be measured by the method described in the following Examples.

<Method for producing the present electrolyte>

The method for producing the present electrolyte preferably includes a step A of firing the present material, and is more preferably a method for molding the present material and then firing the resulting material to obtain a sintered body.

The firing temperature in the step A is preferably 500 to 900°C, more preferably 600 to 900°C, and further preferably 650 to 900°C.

Because the present material is used, a sintered body having a sufficient ion conductivity can be obtained even when the present material is fired at such a low temperature.

The firing time in the step A depends on the firing temperature, and is preferably 12 to 144 hours and more preferably 48 to 96 hours.

When the firing time is in the above range, a sintered body having a sufficient ion conductivity can be obtained even when the present material is fired at such a low temperature.

The firing in the step A may be carried out in the atmosphere, and is preferably carried out in an atmosphere of nitrogen gas and/or argon gas in which the oxygen gas content is adjusted in the range of 0 to 20% by volume.

In addition, the firing in the step A may be carried out in a reducing gas atmosphere such as a nitrogen-hydrogen mixed gas including a reducing gas such as hydrogen gas. The ratio of hydrogen gas included in the nitrogen-hydrogen mixed gas is, for example, 1 to 10% by volume. As the reducing gas other than hydrogen gas, for example, ammonia gas, or carbon monoxide gas may be used.

In the step A, it is preferable to fire a molded body obtained by molding the present material and it is more preferable to fire a molded body obtained by press molding the present material, from the viewpoint of, for example, being able to easily obtain a solid electrolyte (sintered body) having a higher ion conductivity.

The pressure when press molding the present material is not particularly limited, and is preferably 50 to 500 MPa and more preferably 100 to 400 MPa.

The shape of the molded body obtained by press molding the present material is not particularly limited, either, and is preferably a shape dependent on the intended use of the sintered body (solid electrolyte) obtained by firing the molded body.

When producing the present electrolyte, other components other than the present material may be used. Examples of the other components include a conventionally known material used for a solid electrolyte of an all-solid-state battery, and examples of, for example, a lithium ion conductive compound include a lithium ion conductive material having a structure such as NASICON type one or LISICON type one.

As each of the other components, one may be used, or two or more may be used.

The amount of the other components used is preferably 50% by mass or less and more preferably 30% by mass or less per 100% by mass in total of the other components and the present material, and the other components are preferably not used.

<<All-solid-state battery>>

The all-solid-state battery according to one embodiment of the present invention (hereinafter, also referred to as "the present battery") includes a positive electrode having a positive electrode active material, a negative electrode having a negative electrode active material, and a solid electrolyte layer between the positive electrode and the negative electrode, wherein the solid electrolyte layer includes the present electrolyte.

The present battery may be a primary battery or a secondary battery, and is preferably a secondary battery and more preferably a lithium ion secondary battery, from the viewpoint of, for example, exerting the advantageous effects of the present invention more.

The structure of the present battery is not particularly limited as long as the present battery include a positive electrode, a negative electrode, and a solid electrolyte layer between the positive electrode and the negative electrode, and may be a so-called thin film type, laminated type, or bulk type.

<Solid electrolyte layer>

The solid electrolyte layer is not particularly limited as long as the solid electrolyte layer includes the present electrolyte, and if necessary, may include a conventionally known additive used for the solid electrolyte layer of the all-solid-state battery, and the solid electrolyte layer preferably consists of the present electrolyte.

The thickness of the solid electrolyte layer may be appropriately selected according to the structure (for example thin film type) of the battery to be formed, and is preferably 50 nm to 1000 $\mu$m and more preferably 100 nm to 100 $\mu$m.

<Positive electrode>

The positive electrode is not particularly limited as long as the positive electrode has a positive electrode active material, and preferable examples thereof include a positive electrode having a positive electrode current collector and a positive electrode active material layer.

[Positive electrode active material layer]

The positive electrode active material layer is not particularly limited as long as the positive electrode active material layer includes a positive electrode active material, and the positive electrode active material layer preferably includes a positive electrode active material and a solid electrolyte and may further include an additive such as an electrically conductive aid or a sintering aid.

The thickness of the positive electrode active material layer may be appropriately selected according to the structure (for example thin film type) of the battery to be formed, and is preferably 10 to 200 $\mu$m, more preferably 30 to 150 $\mu$m, and further preferably 50 to 100 $\mu$m.

• Positive electrode active material

Examples of the positive electrode active material include LiCo oxide, LiNiCo oxide, LiNiCoMn oxide, LiNiMn oxide, LiMn oxide, LiMn spinel, LiMnNi oxide, LiMnAl oxide, LiMnMg oxide, LiMnCo oxide, LiMnFe oxide, LiMnZn oxide, LiCrNiMn oxide, LiCrMn oxide, lithium titanate, metal lithium phosphate, a transition metal oxide, titanium sulfide, graphite, hard carbon, a transition metal-containing lithium nitride, silicon oxide, lithium silicate, lithium metal, a lithium alloy, a Li-containing solid solution, and a lithium-storing intermetallic compound.

Among these, LiNiCoMn oxide, LiNiCo oxide, and LiCo oxide are preferable, and LiNiCoMn oxide is more preferable, from the viewpoint of, for example, having a good affinity with a solid electrolyte, having an excellent balance of macroscopic electrical conductivity, microscopic electrical conductivity, and ion conductivity, having a high average potential, and being able to increase the energy density or battery capacity in the balance between specific capacity and stability.

In addition, the surface of the positive electrode active material may be coated with, for example, an ion conductive oxide such as lithium niobate, lithium phosphate, or lithium borate.

As the positive electrode active material used for the positive electrode active material layer, one may be used or two or more may be used.

Preferable examples of the positive electrode active material also include $LiM3PO_4$ [where M3 is one or more elements selected from the group consisting of Mn, Co, Ni, Fe, Al, Ti, and V, or two elements V and O], $LiM5VO_4$ [where M5 is one or more elements selected from the group consisting of Fe, Mn, Co, Ni, Al, and Ti], $Li_2M6P_2O_7$ [where M6 is one or more elements selected from the group consisting of Fe, Mn, Co, Ni, Al, Ti, and V, or two elements V and O], $LiVP_2O_7$, $Li_{x7}V_{y7}M7_{z7}$ [where $2 \leq x7 \leq 4$, $1 \leq y7 \leq 3$, $0 \leq z7 \leq 1$, $1 \leq y7 + z7 \leq 3$, and M7 is one or more elements selected from the group consisting of Ti, Ge, Al, Ga, and Zr], $Li_{1+x8}Al_{x8}M8_{2-x8}(PO_4)_3$ [where $0 \leq x8 \leq 0.8$, and M8 is one or more elements selected from the group consisting of Ti and Ge], $LiNi_{1/3}Co_{1/3}Mn_{1/3}O_2$, $LiCoO_2$, $LiNiO_2$, $LiMn_2O_4$, $Li_2CoP_2O_7$, $Li_3V_2(PO_4)_3$, $Li_3Fe_2(PO_4)_3$, $LiNi_{0.5}Mn_{1.5}O_4$, and $Li_4Ti_5O_{12}$.

The positive electrode active material is preferably in the form of a particle. The 50% diameter in the volume-based particle size distribution thereof is preferably 0.1 to 30 $\mu$m, more preferably 0.3 to 20 $\mu$m, further preferably 0.4 to 10 $\mu$m, and particularly preferably 0.5 to 3 $\mu$m.

In addition, the ratio of the length of the major axis to the length of the minor axis (length of the major axis/length of the minor axis), that is, the aspect ratio, of the positive electrode active material is preferably less than 3 and more preferably less than 2.

The positive electrode active material may form a secondary particle. In that case, the 50% diameter in the number-based particle size distribution of the primary particle is preferably 0.1 to 20 $\mu$m, more preferably 0.3 to 15 $\mu$m, further preferably 0.4 to 10 $\mu$m, and particularly preferably 0.5 to 2 $\mu$m.

The content of the positive electrode active material in the positive electrode active material layer is preferably 20 to 80% by volume and more preferably 30 to 70% by volume.

When the content of the positive electrode active material is in the above range, the positive electrode active material functions favorably, and a battery having a high energy density tends to be able to be easily obtained.

• Solid electrolyte

The solid electrolyte that can be used for the positive electrode active material layer is not particularly limited, and a conventionally known solid electrolyte can be used, and the present electrolyte is preferably used from the viewpoint of, for example, exerting the advantageous effects of the present invention more.

As the solid electrolyte used for the positive electrode active material layer, one may be used or two or more may be used.

• Additives

Preferable examples of the electrically conductive aid include a metal material such as Ag, Au, Pd, Pt, Cu, or Sn, and a carbon material such as acetylene black, ketjen black, a carbon nanotube, or a carbon nanofiber.

As the sintering aid, the same compounds as for the compound (b) are preferable.

As each additive used for the positive electrode active material layer, one may be used or two or more may be used.

• Positive electrode current collector

The positive electrode current collector is not particularly limited as long as the material thereof is one that conducts an electron without causing an electrochemical reaction. Examples of the material of the positive electrode current collector include a simple substance of a metal such as copper, aluminum, or iron, an alloy including any of these metals, and an electrically conductive metal oxide such as antimony-doped tin oxide (ATO) or tin-doped indium oxide (ITO) .

As the positive electrode current collector, a current collector obtained by providing an electrically conductive adhesive layer on the surface of an electric conductor can also be used. Examples of the electrically conductive adhesive layer include a layer including, for example, a granular electrically conductive material, or a fibrous electrically conductive material.

<Negative electrode>

The negative electrode is not particularly limited as long as the negative electrode has a negative electrode active material, and preferable examples thereof include a negative electrode having a negative electrode current collector and a negative electrode active material layer.

[Negative electrode active material layer]

The negative electrode active material layer is not particularly limited as long as the negative electrode active material layer includes a negative electrode active material, and the negative electrode active material layer preferably includes a negative electrode active material and a solid electrolyte and may further include an additive such as an electrically conductive aid or a sintering aid.

The thickness of the negative electrode active material layer may be appropriately selected according to the structure (for example thin film type) of the battery to be formed, and is preferably 10 to 200 $\mu$m, more preferably 30 to 150 $\mu$m, and further preferably 50 to 100 $\mu$m.

• Negative electrode active material

Examples of the negative electrode active material include a lithium alloy, a metal oxide, graphite, hard carbon, soft carbon, silicon, a silicon alloy, silicon oxide $SiO_n$ (0 < n $\leq$ 2), a silicon/carbon composite material, a composite material including a silicon domain within a pore of porous carbon, lithium titanate, and graphite coated with lithium titanate.

Among these, a silicon/carbon composite material and a composite material including a silicon domain in a pore of porous carbon are preferable because these have a high specific capacity and can increase the energy density and the battery capacity. A composite material including a silicon domain in a pore of porous carbon is more preferable, has excellent alleviation of volume expansion associated with lithium storage/release by silicon, and can maintain the balance of macroscopic electrical conductivity, microscopic electrical conductivity, and ion conductivity well. A composite material including a silicon domain in a pore of porous carbon in which the silicon domain is amorphous, the size of the silicon domain is 10 nm or less, and the pore derived from the porous carbon is present in the vicinity of the silicon domain is particularly preferable.

Preferable examples of the negative electrode active material also include $LiM3PO_4$ [where M3 is one or more elements selected from the group consisting of Mn, Co, Ni, Fe, Al, Ti, and V, or two elements V and O], $LiM5VO_4$ [where M5 is one or more elements selected from the group consisting of Fe, Mn, Co, Ni, Al, and Ti], $Li_2M6P_2O_7$ [where M6 is one or more elements selected from the group consisting of Fe, Mn, Co, Ni, Al, Ti, and V, or two elements V and O], $LiVP_2O_7$, $Li_{x7}V_{y7}M7_{z7}$ [where 2 $\leq$ x7 $\leq$ 4, 1 $\leq$ y7 $\leq$ 3, 0 $\leq$ z7 $\leq$ 1, 1 $\leq$ y7 + z7 $\leq$ 3, and M7 is one or more elements selected from the group consisting of Ti, Ge, Al, Ga, and Zr], $Li_{1+x8}Al_{x8}M8_{2-x8}(PO_4)_3$ [where $0 \leq x8 \leq 0.8$, and M8 is one or more elements selected from the group consisting of Ti and Ge], $(Li_{3-a9 \times 9+(5-b9)y9}M9_{x9})(V_{1-y9}M10_{y9})O_4$ [where M9 is one or more elements selected from the group consisting of Mg, Al, Ga, and Zn, M10 is one or more elements selected from the group consisting of Zn, Al, Ga, Si, Ge, P, and Ti, $0 \leq x9 \leq 1.0$, $0 \leq y9 \leq 0.6$, a9 is an average valence of M9, and b9 is an average valence of M10], $LiNb_2O_7$, $Li_4Ti_5O_{12}$, $Li_4Ti_5PO_{12}$, $TiO_2$, LiSi, and graphite.

The negative electrode active material is preferably in the form of a particle. The 50% diameter in the volume-based particle size distribution thereof, the aspect ratio, and the 50% diameter in the number-based particle size distribution of a primary particle when the negative electrode active material forms a secondary particle are preferably in the same ranges as for the positive electrode active material.

The content of the negative electrode active material in the negative electrode active material layer is preferably 20 to 80% by volume and more preferably 30 to 70% by volume.

When the content of the negative electrode active material is in the above range, the negative electrode active material functions favorably, and a battery having a high energy density tends to be able to be easily obtained.

• Solid electrolyte

The solid electrolyte that can be used for the negative electrode active material layer is not particularly limited, and a conventionally known solid electrolyte can be used, and the present electrolyte is preferably used from the viewpoint of, for example, exerting the advantageous effects of the present invention more.

As the solid electrolyte used for the negative electrode active material layer, one may be used or two or more may be used.

• Additives

Preferable examples of the electrically conductive aid include a metal material such as Ag, Au, Pd, Pt, Cu, or Sn, and a carbon material such as acetylene black, ketjen black, a carbon nanotube, or a carbon nanofiber.

As the sintering aid, the same compounds as for the compound (b) are preferable.

As each additive used for the negative electrode active material layer, one may be used or two or more may be used.

• Negative electrode current collector

As the negative electrode current collector, the same current collector as for the positive electrode current collector can be used.

<Method for producing all-solid-state battery>

The all-solid-state battery can be formed, for example, by a known powder molding method. For example, the positive electrode current collector, a powder for the positive electrode active material layer, a powder for the solid electrolyte layer, a powder for the negative electrode active material layer, and the negative electrode current collector are stacked in this order, these are powder molded at the same time, and thereby formation of each layer of the positive electrode active material layer, the solid electrolyte layer, and the negative electrode active material layer, and connection between any adjacent two of the positive electrode current collector, the positive electrode active material layer, the solid electrolyte layer, the negative electrode active material layer, and the negative electrode current collector can be carried out at the same time.

When carrying out this powder molding, it is preferable to carry out firing at the same temperature as the firing temperature in the step A while applying a pressure comparable to the pressure when press molding the present material in the step A.

According to one embodiment of the present invention, even if the firing temperature when manufacturing the all-solid-state battery is low, an all-solid-state battery exhibiting a sufficient ion conductivity can be obtained, and thus it is possible to manufacture an all-solid-state battery with excellent economic efficiency and equipment saving while suppressing, for example, decomposition, and alteration in quality of another material such as a positive electrode or negative electrode material.

Each layer of the positive electrode active material layer, the solid electrolyte layer, and the negative electrode active material layer may be powder molded, and when an all-solid-state battery is manufactured using each of the obtained layers, each of the layers is preferably pressed to carry out firing.

In addition, the all-solid-state battery can also be manufactured, for example, by the following method.

For example a solvent, and/or a resin are(is) appropriately mixed into a material for positive electrode active material layer formation, a material for solid electrolyte layer formation, and a material for negative electrode active material layer formation to prepare pastes for formation of the layers, respectively, and the pastes are applied onto base sheets, respectively, and dried to manufacture a green sheet for the positive electrode active material layer, a green sheet for the solid electrolyte layer, and a green sheet for the negative electrode active material layer. Next, the green sheet for the positive electrode active material layer, the green sheet for the solid electrolyte layer, and the green sheet for the negative electrode active material layer from each of which the base sheet is peeled off are sequentially laminated, thermocompression bonded at a predetermined pressure, and then enclosed in a container and pressurized by, for example, hot isostatic pressing, cold isostatic pressing, or isostatic pressing to manufacture a laminated structure.

After that, if necessary, the laminated structure is subjected to degreasing treatment at a predetermined temperature and then to firing treatment to manufacture a laminated sintered body.

The firing temperature in this firing treatment is preferably the same as the firing temperature in the step A.

Next, if necessary, an all-solid-state battery can also be manufactured by forming a positive electrode current collector and a negative electrode current collector on both principal surfaces of the laminated sintered body by, for example, a sputtering method, a vacuum vapor deposition method, or application or dipping of a metal paste.

Examples

Hereinafter, the present invention will be specifically described based on Examples. The present invention is not limited to these Examples.

[Synthesis Example 1] Synthesis of $Li_4B_2O_5$

Lithium hydroxide monohydrate (LiOH•$H_2O$) (manufactured by FUJIFILM Wako Pure Chemical Corporation, purity of 98.0% or more) and boric acid ($H_3BO_3$) (manufactured by FUJIFILM Wako Pure Chemical Corporation, purity of 99.5% or more) were weighed such that the ratio of the numbers of atoms of lithium and boron (Li:B) was 2.00:1.00. The raw material powders thereof weighed were pulverized and mixed in an agate mortar for 15 minutes to obtain a mixture.

The obtained mixture was placed in an alumina boat, and the temperature thereof was raised to 500°C under a condition of a temperature rise rate of 10°C/min in an atmosphere of air (flow rate: 100 mL/min) using a rotary firing furnace (manufactured by Motoyama Co., Ltd.), and the mixture was fired at 500°C for 2 hours to obtain a primary fired product.

The obtained primary fired product was pulverized and mixed in an agate mortar for 15 minutes, the obtained mixture was placed in an alumina boat, and the temperature thereof was raised to 630°C under a condition of a temperature rise rate of 10°C/min in an atmosphere of air (flow rate: 100 mL/min) using a rotary firing furnace (manufactured by Motoyama Co., Ltd.), and the mixture was fired at 630°C for 24 hours to obtain a secondary fired product ($Li_4B_2O_5$).

The temperature of the obtained secondary fired product was lowered to room temperature, then taken out from the rotary firing furnace, transferred into a dehumidified nitrogen gas atmosphere, and stored.

[Synthesis Example 2] Synthesis of $Li_3BO_3$

A secondary fired product ($Li_3BO_3$) was obtained in the same manner as in Synthesis Example 1 except that lithium hydroxide monohydrate (LiOH•$H_2O$) (manufactured by FUJIFILM Wako Pure Chemical Corporation, purity of 98.0% or more) and boric acid ($H_3BO_3$) (manufactured by FUJIFILM Wako Pure Chemical Corporation, purity of 99.5% or more) were weighed such that the ratio of the numbers of atoms of lithium and boron (Li:B) was 3.00:1.00.

[Synthesis Example 3] Synthesis of $LiBiO_2$

Lithium hydroxide monohydrate (LiOH•$H_2O$) (manufactured by FUJIFILM Wako Pure Chemical Corporation, purity of 98.0% or more) and bismuth oxide (manufactured by FUJIFILM Wako Pure Chemical Corporation, purity of 99.9%) were weighed such that the ratio of the numbers of atoms of lithium and bismuth (Li:Bi) was 1:1. The raw material powders thereof weighed were pulverized and mixed in an agate mortar for 15 minutes to obtain a mixture.

The obtained mixture was placed in an alumina boat, and the temperature thereof was raised to 600°C under a condition of a temperature rise rate of 10°C/min in an atmosphere of air (flow rate: 100 mL/min) using a rotary firing furnace (manufactured by Motoyama Co., Ltd.), and the mixture was fired at 600°C for 4 hours to obtain a fired product ($LiBiO_2$).

The temperature of the obtained fired product was lowered to room temperature, then taken out from the rotary firing furnace, transferred into a dehumidified nitrogen gas atmosphere, and stored.

[Example 1]

An appropriate amount of toluene was added to tantalum pentoxide ($Ta_2O_5$) (manufactured by FUJIFILM Wako Pure Chemical Corporation, purity of 99.9%), and $Ta_2O_5$ was pulverized for 2 hours using a zirconia ball mill (zirconia ball: diameter of 3 mm) .

Next, lithium carbonate ($Li_2CO_3$) (manufactured by Sigma-Aldrich, Inc., purity 99.0% or more), the pulverized tantalum pentoxide ($Ta_2O_5$), $Li_4B_2O_5$ obtained in Synthesis Example 1 described above, and diammonium hydrogen phosphate (($NH_4)_2HPO_4$) (manufactured by Sigma-Aldrich, Inc., purity of 98% or more) were weighed such that the ratio of the numbers of atoms of lithium, tantalum, boron, and phosphorus (Li:Ta:B:P) was as shown in Table 1, and further, in order to suppress the generation of a by-product in the firing step, diammonium hydrogen phosphate was weighed in such a way as to provide an amount of 1.065 times the amount of phosphorus atoms in Table 1. An appropriate amount of toluene was added to the raw material powders thereof weighed, and these were pulverized and mixed for 2 hours using a zirconia ball mill (zirconia ball: diameter of 1 mm) to obtain a solid electrolyte material.

The obtained solid electrolyte material was evaluated by powder X-ray diffraction described later and found to be amorphous.

[Examples 2 to 4]

Amorphous solid electrolyte materials were obtained by manufacturing in the same manner as in Example 1 except that in Example 1, the mixing ratios of the raw materials were changed such that the ratios of the numbers of atoms of lithium, tantalum, boron, and phosphorus were the amounts shown in Table 1.

The solid electrolyte material obtained in Example 3 was evaluated by powder X-ray diffraction described later, and it was found that the half-width of a diffraction peak at 28.59° having the maximum intensity that was able to be confirmed in the range of $20° \leq 2\theta \leq 40°$ was 1.03° and the solid electrolyte material was amorphous.

[Example 5]

An appropriate amount of toluene was added to niobium pentoxide ($Nb_2O_5$) (manufactured by FUJIFILM Wako Pure Chemical Corporation, purity of 99.9%), and $Nb_2O_5$ was pulverized for 2 hours using a zirconia ball mill (zirconia ball: diameter of 3 mm) .

Next, an amorphous solid electrolyte material was obtained by manufacturing in the same manner as in Example 1 except that in Example 1, the pulverized niobium pentoxide ($Nb_2O_5$) was used instead of $Li_4B_2O_5$, and each raw material powder was used such that the ratio of the numbers of atoms of lithium, tantalum, niobium, and phosphorus (Li:Ta:Nb:P) was as shown in Table 1.

[Examples 6 and 7]

Amorphous solid electrolyte materials were obtained by manufacturing in the same manner as in Example 5 except that in Example 5, $Li_4B_2O_5$ obtained in Synthesis Example 1 described above was further used, and each raw material powder was used such that the ratios of the numbers of atoms of lithium, tantalum, niobium, boron, and phosphorus were as shown in Table 1.

[Examples 8 to 12]

Amorphous solid electrolyte materials were obtained by manufacturing in the same manner as in Example 1 except that in Example 1, $Li_3BO_3$ obtained in Synthesis Example 2 described above was used instead of $Li_4B_2O_5$, and each raw material powder was used such that the ratios of the numbers of atoms of lithium, tantalum, boron, and phosphorus were as shown in Table 1.

[Example 13]

An amorphous solid electrolyte material was obtained by manufacturing in the same manner as in Example 1 except that in Example 1, boric acid ($H_3BO_3$) (manufactured by FUJIFILM Wako Pure Chemical Corporation, purity of 99.5% or more) was used instead of $Li_4B_2O_3$, and each raw material powder was used such that the ratio of the numbers of atoms of lithium, tantalum, boron, and phosphorus was as shown in Table 1.

[Example 14]

An amorphous solid electrolyte material was obtained by manufacturing in the same manner as in Example 1 except that in Example 1, lithium hydroxide monohydrate (LiOH•$H_2$O) (manufactured by FUJIFILM Wako Pure Chemical Corporation, purity of 98.0% or more) was used instead of lithium carbonate, and each raw material powder was used such that the ratio of the numbers of atoms of lithium, tantalum, boron, and phosphorus was as shown in Table 1.

[Example 15]

An amorphous solid electrolyte material was obtained by manufacturing in the same manner as in Example 1 except that in Example 1, lithium acetate ($CH_3$COOLi) (manufactured by FUJIFILM Wako Pure Chemical Corporation, purity of 98.0% or more) was used instead of lithium carbonate, and each raw material powder was used such that the ratio of the numbers of atoms of lithium, tantalum, boron, and phosphorus was as shown in Table 1.

[Example 16]

An amorphous solid electrolyte material was obtained by manufacturing in the same manner as in Example 1 except that in Example 1, silicon oxide ($SiO_2$) (manufactured by FUJIFILM Wako Pure Chemical Corporation, purity of 99.9%) was used instead of $Li_4B_2O_5$, and each raw material powder was used such that the ratio of the numbers of atoms of lithium, tantalum, phosphorus, and silicon was as shown in Table 1.

[Examples 17 to 19]

Amorphous solid electrolyte materials were obtained by manufacturing in the same manner as in Example 1 except that in Example 1, silicon oxide ($SiO_2$) (manufactured by FUJIFILM Wako Pure Chemical Corporation, purity of 99.9%) was further used, and each raw material powder was used such that the ratios of the numbers of atoms of lithium, tantalum, boron, phosphorus, and silicon were as shown in Table 1.

[Examples 20 to 24]

Amorphous solid electrolyte materials were obtained by manufacturing in the same manner as in Example 8 except that in Example 8, silicon oxide ($SiO_2$) (manufactured by FUJIFILM Wako Pure Chemical Corporation, purity of 99.9%) was further used, and each raw material powder was used such that the ratios of the numbers of atoms of lithium, tantalum, boron, phosphorus, and silicon were as shown in Table 1.

[Example 25]

An amorphous solid electrolyte material was obtained by manufacturing in the same manner as in Example 1 except that in Example 1, $LiBiO_2$ obtained in Synthesis Example 3 was used instead of $Li_4B_2O_5$, and each raw material powder was used such that the ratio of the numbers of atoms of lithium, tantalum, bismuth, and phosphorus was as shown in Table 1.

[Example 26]

An amorphous solid electrolyte material was obtained by manufacturing in the same manner as in Example 25 except that in Example 25, silicon oxide ($SiO_2$) (manufactured by FUJIFILM Wako Pure Chemical Corporation, purity of 99.9%) was further used, and each raw material powder was used such that the ratio of the numbers of atoms of lithium, tantalum, bismuth, phosphorus, and silicon (Li:Ta:Bi:P:Si) was as shown in Table 1.

[Comparative Example 1]

Lithium carbonate ($Li_2CO_3$) (manufactured by Sigma-Aldrich, Inc., purity of 99.0% or more), tantalum pentoxide ($Ta_2O_5$) (manufactured by FUJIFILM Wako Pure Chemical Corporation, purity of 99.9%), and diammonium hydrogen phosphate (($NH_4$)$_2$HPO$_4$) (manufactured by Sigma-Aldrich, Inc., purity of 98% or more) were weighed such that the ratio of the numbers of atoms of lithium, tantalum, and phosphorus (Li:Ta:P) was as shown in Table 1; further, considering a lithium atom flowing out of the system in the firing step, lithium carbonate was weighed in such a way as to provide an amount of 1.1 times the amount of lithium atoms in Table 1; and further, in order to suppress the generation of a by-product in the firing step, diammonium hydrogen phosphate was weighed in such a way as to provide an amount of 1.065 times the amount of phosphorus atoms in Table 1. An appropriate amount of toluene was added to the raw material powders thereof weighed, and these were pulverized and mixed for 2 hours using a zirconia ball mill (zirconia ball: diameter of 1 mm) .

The obtained mixture was placed in an alumina boat, and the temperature thereof was raised to 1000°C under a condition of a temperature rise rate of 10°C/min in an atmosphere of air (flow rate: 100 mL/min) using a rotary firing furnace (manufactured by Motoyama Co., Ltd.), and the mixture was fired at 1000°C for 4 hours to obtain a primary fired product.

The obtained primary fired product was pulverized and mixed in an agate mortar for 15 minutes, the obtained mixture was placed in an alumina boat, and the temperature thereof was raised to 1000°C under a condition of a temperature rise rate of 10°C/min in an atmosphere of air (flow rate: 100 mL/min) using a rotary firing furnace (manufactured by Motoyama Co., Ltd.), and the mixture was fired at 1000°C for 1 hour to obtain a secondary fired product.

An appropriate amount of toluene was added to the obtained fired product, and this was pulverized and mixed for 2 hours using a zirconia ball mill (zirconia ball: diameter of 1 mm) to obtain an amorphous solid electrolyte material.

[Comparative Example 2]

An amorphous solid electrolyte material was obtained by manufacturing in the same manner as in Comparative Example 1 except that the mixing ratio of the raw materials was changed such that the ratio of the numbers of atoms of lithium, tantalum, and phosphorus was the amount shown in Table 1.

[Example 27]

Lithium carbonate ($Li_2CO_3$) (manufactured by Sigma-Aldrich, Inc., purity 99.0% or more), tantalum pentoxide ($Ta_2O_5$) (manufactured by FUJIFILM Wako Pure Chemical Corporation, purity of 99.9%), $Li_4B_2O_5$ (Synthesis Example 1), and diammonium hydrogen phosphate (($NH_4$)$_2HPO_4$) (manufactured by Sigma-Aldrich, Inc., purity of 98% or more) were weighed such that the ratio of the numbers of atoms of lithium, tantalum, boron, and phosphorus (Li:Ta:B:P) was as shown in Table 2; and further, in order to suppress the generation of a by-product in the firing step, diammonium hydrogen phosphate was weighed in such a way as to provide an amount of 1.065 times the amount of phosphorus atoms in Table 2. An appropriate amount of toluene was added to the raw material powders thereof weighed, and these were pulverized and mixed for 2 hours using a zirconia ball mill (zirconia ball: diameter of 1 mm) to obtain a solid electrolyte material.

The obtained solid electrolyte material was evaluated by powder X-ray diffraction described later, and it was found that the half-width of a diffraction peak at 22.89° having the maximum intensity that was able to be confirmed in the range of $20° \leq 2\theta \leq 40°$ was 0.29° and the solid electrolyte material was amorphous.

[Comparative Example 3]

Lithium carbonate ($Li_2CO_3$) (manufactured by Sigma-Aldrich, Inc., purity of 99.0% or more), tantalum pentoxide ($Ta_2O_5$) (manufactured by FUJIFILM Wako Pure Chemical Corporation, purity of 99.9%), $Li_4B_2O_5$ (Synthesis Example 1), and diammonium hydrogen phosphate (($NH_4$)$_2HPO_4$) (manufactured by Sigma-Aldrich, Inc., purity of 98% or more) were weighed such that the ratio of the numbers of atoms of lithium, tantalum, boron, and phosphorus (Li:Ta:B:P) was as shown in Table 2; further, considering a lithium atom flowing out of the system in the firing step, lithium carbonate was weighed in such a way as to provide an amount of 1.1 times the amount of lithium atoms in Table 2; and further, in order to suppress the generation of a by-product in the firing step, diammonium hydrogen phosphate was weighed in such a way as to provide an amount of 1.065 times the amount of phosphorus atoms in Table 2. An appropriate amount of toluene was added to the raw material powders thereof weighed, and these were pulverized and mixed for 2 hours using a zirconia ball mill (zirconia ball: diameter of 1 mm).

The obtained mixture was placed in an alumina boat, and the temperature thereof was raised to 1000°C under a condition of a temperature rise rate of 10°C/min in an atmosphere of air (flow rate: 100 mL/min) using a rotary firing furnace (manufactured by Motoyama Co., Ltd.), and the mixture was fired at 1000°C for 4 hours to obtain a solid electrolyte material.

The obtained solid electrolyte material was evaluated by powder X-ray diffraction described later, and it was found that the half-width of a diffraction peak at 25.39° having the maximum intensity that was able to be confirmed in the range of $20° \leq 2\theta \leq 40°$ was 0.11° and the solid electrolyte material was crystalline.

<Powder X-ray diffraction (XRD)>

Using a powder X-ray diffraction analyzer, PANalytical MPD (manufactured by Spectris Co., Ltd.), X-ray diffraction measurement of the obtained solid electrolyte materials (Cu-K$\alpha$ radiation (output: 45 kV, 40 mA), diffraction angle 2$\theta$ = range of 10 to 50°, step width: 0.013°, incident side Sollerslit: 0.04 rad, incident side Anti-scatter slit: 2°, light receiving side Sollerslit: 0.04 rad, light receiving side Anti-scatter slit: 5 mm) was carried out to obtain X-ray diffraction (XRD) patterns. The crystal structures were confirmed by carrying out Rietveld analysis of the obtained XRD patterns using the known analysis software RIETAN-FP (available on creator; Fujio Izumi's website "RIETAN-FP/VENUS system distribution file"
(http://fujioizumi.verse.jp/download/download.html)).

The half-width was calculated by fitting using the nonlinear least squares method using a pseudo-Voigt function. The pseudo-Voigt function used is a function in which a Gauss function and a Lorentz function having the same half-width are weighted and linearly combined, and is specifically expressed by the following expression (1).
[Math. 1]

$$f(x) = c + A\left[m\frac{2}{\pi}\frac{\omega}{4(x-x_0)+\omega^2} + (1-m)\frac{\sqrt{4\ln 2}}{\sqrt{\pi}\omega}e^{-\frac{4\ln 2}{\omega^2}(x-x_0)^2}\right]$$

$$\cdots (1)$$

[where c corresponds to the background intensity, A corresponds to the peak area, m is the weight of the Gauss function and the Lorentz function and is in the range of $0 \leq m \leq 1$, $\omega$ corresponds to the half-width of the diffraction peak, and $x_0$ corresponds to the diffraction angle of the diffraction peak].

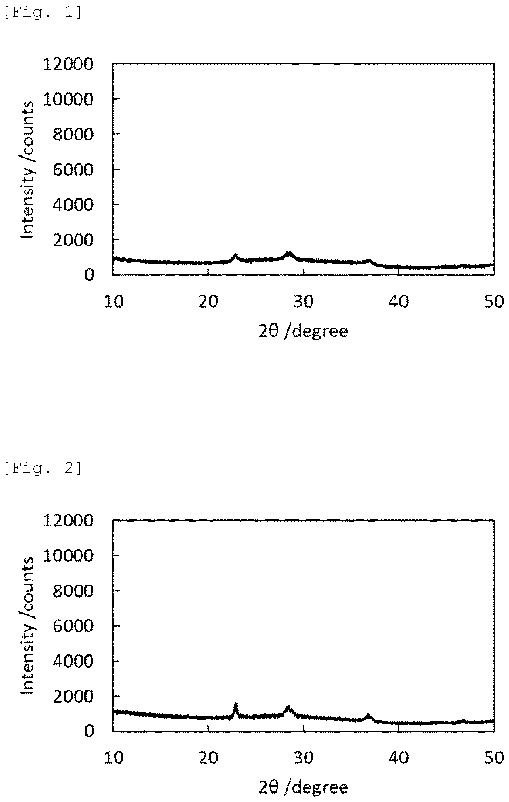

The XRD patterns of the solid electrolyte materials obtained in Example 3, Example 27, and Comparative Example 3 are shown in Figure 1, Figure 2, and Figure 3, respectively.

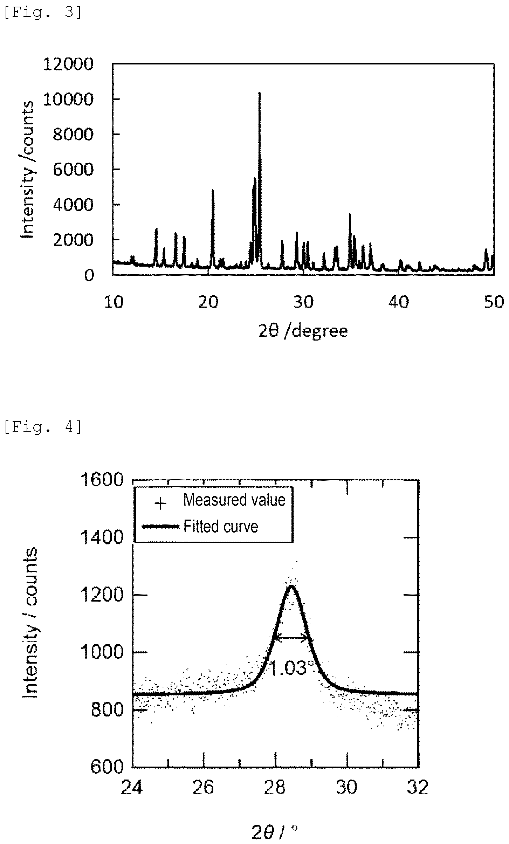

Further, in the XRD patterns of the solid electrolyte materials obtained in Example 3, Example 27, and Comparative Example 3, results of fitting the diffraction peak having the maximum intensity that was able to be confirmed in the range of $20° \leq 2\theta \leq 40°$ by the method described above are shown in Figure 4, Figure 5, and Figure 6, respectively.

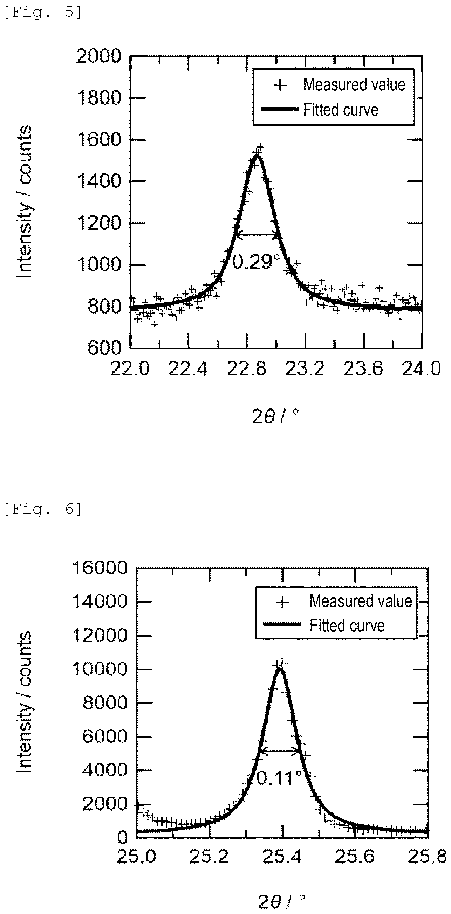

In Tables 1 and 2, when the half-width of the diffraction peak having the maximum intensity that was able to be confirmed in the range of $20° \leq 2\theta \leq 40°$ was larger than 0.15° as shown in Figure 4 and Figure 5, the rating "amorphous" was given, and when the half-width of the diffraction peak having the maximum intensity that was able to be confirmed in the range of $20° \leq 2\theta \leq 40°$ is 0.15° or less as shown in Figure 6, the rating "crystalline" was given.

<Manufacture of pellet>

Using a tableting machine, a pressure of 40 MPa was applied with a hydraulic press to any of the obtained solid electrolyte materials to form a disk-shaped tableted body having a diameter of 10 mm and a thickness of 1 mm, and next, a pressure of 300 MPa was applied to the disk-shaped tableted body by CIP (cold isostatic pressing) to manufacture a pellet.

<Manufacture of sintered body>

The obtained pellet was placed in an alumina boat, and the temperature thereof was raised to the temperature (650°C, 700°C, 750°C, or 850°C) shown in the column of Total conductivity in Table 1 under a condition of a temperature rise rate of 10°C/min in an atmosphere of air (flow rate: 100 mL/min) using a rotary firing furnace (manufactured by Motoyama Co., Ltd.), and the pellet was fired at the above temperature for 96 hours to obtain a sintered body.

The temperature of the obtained sintered body was lowered to room temperature, then taken out from the rotary firing furnace, transferred into a dehumidified nitrogen gas atmosphere, and stored.

<Total conductivity>

A gold layer was formed on each of both sides of the obtained sintered body using a sputtering machine to obtain a measurement pellet for ion conductivity evaluation.

The obtained measurement pellet was kept in a constant temperature bath at 25°C for 2 hours before measurement. Next, AC impedance measurement was carried out at 25°C in a frequency range of 1 Hz to 10 MHz under a condition of an amplitude of 25 mV using an impedance analyzer (manufactured by Solartron Analytical, model number: 1260A). The obtained impedance spectrum was fitted with an equivalent circuit using the equivalent circuit analysis software ZView included with the analyzer to determine the lithium ion conductivity within a crystal grain and the lithium ion conductivity at a crystal grain boundary, and these were added up to calculate the total conductivity. Results are shown in Table 1 or Table 2. The total conductivity of the sintered body obtained by firing at 650°C using the solid electrolyte material obtained in Comparative Example 1 was too low to obtain a measured value.

[Table 1]

| | Ratio of numbers of atoms (atomic %) | | | | | | | State of solid electrolyte material | Total conductivity (S·cm$^{-1}$) | | | |
|---|---|---|---|---|---|---|---|---|---|---|---|---|
| | Li | B | Si | P | Nb | Ta | Bi | | 850°C | 750°C | 700°C | 650°C |
| Example 1 | 9.6 | 0.8 | 0.0 | 7.9 | 0.0 | 15.9 | 0.0 | Amorphous | $1.25 \times 10^{-3}$ | $1.31 \times 10^{-4}$ | $6.90 \times 10^{-5}$ | - |
| Example 2 | 10.9 | 1.7 | 0.0 | 7.6 | 0.0 | 15.1 | 0.0 | Amorphous | $1.10 \times 10^{-3}$ | $4.17 \times 10^{-4}$ | $1.78 \times 10^{-4}$ | - |
| Example 3 | 12.2 | 2.5 | 0.0 | 7.2 | 0.0 | 14.3 | 0.0 | Amorphous | $7.59 \times 10^{-4}$ | $2.36 \times 10^{-4}$ | $2.64 \times 10^{-4}$ | $3.62 \times 10^{-5}$ |
| Example 4 | 13.6 | 3.4 | 0.0 | 6.8 | 0.0 | 13.6 | 0.0 | Amorphous | - | - | $6.54 \times 10^{-5}$ | $2.28 \times 10^{-5}$ |
| Example 5 | 8.3 | 0.0 | 0.0 | 8.3 | 1.7 | 15.0 | 0.0 | Amorphous | $4.62 \times 10^{-4}$ | - | - | - |
| Example 6 | 9.6 | 0.8 | 0.0 | 1.9 | 1.6 | 14.3 | 0.0 | Amorphous | $1.14 \times 10^{-3}$ | - | - | - |
| Example 7 | 12.2 | 2.5 | 0.0 | 7.2 | 1.4 | 12.9 | 0.0 | Amorphous | $4.78 \times 10^{-4}$ | - | $1.17 \times 10^{-4}$ | - |
| Example 8 | 8.8 | 0.2 | 0.0 | 8.2 | 0.0 | 16.4 | 0.0 | Amorphous | $2.68 \times 10^{-4}$ | - | - | - |
| Example 9 | 9.4 | 0.4 | 0.0 | 8.1 | 0.0 | 16.2 | 0.0 | Amorphous | $4.66 \times 10^{-4}$ | - | - | - |
| Example 10 | 10.4 | 0.9 | 0.0 | 7.8 | 0.0 | 15.7 | 0.0 | Amorphous | $1.15 \times 10^{-3}$ | $1.52 \times 10^{-4}$ | - | - |
| Example 11 | 12.7 | 1.8 | 0.0 | 7.3 | 0.0 | 14.5 | 0.0 | Amorphous | $9.46 \times 10^{-4}$ | $1.88 \times 10^{-4}$ | $1.32 \times 10^{-4}$ | - |
| Example 12 | 15.2 | 2.9 | 0.0 | 6.7 | 0.0 | 13.3 | 0.0 | Amorphous | $6.29 \times 10^{-4}$ | $1.07 \times 10^{-4}$ | $5.33 \times 10^{-5}$ | - |
| Example 13 | 6.7 | 2.9 | 0.0 | 6.7 | 0.0 | 13.3 | 0.0 | Amorphous | $7.99 \times 10^{-4}$ | - | $6.32 \times 10^{-5}$ | - |
| Example 14 | 12.2 | 2.5 | 0.0 | 7.2 | 0.0 | 14.3 | 0.0 | Amorphous | - | - | $3.64 \times 10^{-4}$ | - |
| Example 15 | 12.2 | 2.5 | 0.0 | 7.2 | 0.0 | 14.3 | 0.0 | Amorphous | - | - | $5.34 \times 10^{-4}$ | - |
| Example 16 | 9.8 | 0.0 | 1.6 | 6.6 | 0.0 | 16.4 | 0.0 | Amorphous | $2.35 \times 10^{-4}$ | $7.41 \times 10^{-5}$ | - | - |
| Example 17 | 11.0 | 0.8 | 1.6 | 6.3 | 0.0 | 15.7 | 0.0 | Amorphous | - | $2.32 \times 10^{-4}$ | - | - |
| Example 18 | 12.3 | 1.7 | 1.5 | 6.0 | 0.0 | 14.9 | 0.0 | Amorphous | - | $8.60 \times 10^{-5}$ | $7.11 \times 10^{-5}$ | - |
| Example 19 | 13.5 | 2.5 | 1.4 | 5.7 | 0.0 | 14.1 | 0.0 | Amorphous | - | - | $4.37 \times 10^{-5}$ | - |
| Example 20 | 10.3 | 0.2 | 1.6 | 6.5 | 0.0 | 16.2 | 0.0 | Amorphous | $3.62 \times 10^{-4}$ | - | - | - |
| Example 21 | 10.8 | 0.4 | 1.6 | 6.4 | 0.0 | 15.9 | 0.0 | Amorphous | $4.27 \times 10^{-4}$ | - | - | - |
| Example 22 | 11.8 | 0.9 | 1.5 | 6.2 | 0.0 | 15.4 | 0.0 | Amorphous | $4.17 \times 10^{-4}$ | $2.13 \times 10^{-4}$ | - | - |
| Example 23 | 14.0 | 1.8 | 1.4 | 5.7 | 0.0 | 14.3 | 0.0 | Amorphous | $3.00 \times 10^{-4}$ | - | - | - |
| Example 24 | 16.4 | 2.8 | 1.3 | 5.3 | 0.0 | 13.2 | 0.0 | Amorphous | - | $1.16 \times 10^{-5}$ | - | - |

(continued)

| | Ratio of numbers of atoms (atomic %) | | | | | | | State of solid electrolyte material | Total conductivity (S•cm$^{-1}$) | | | |
|---|---|---|---|---|---|---|---|---|---|---|---|---|
| | Li | B | Si | P | Nb | Ta | Bi | | 850°C | 750°C | 700°C | 650°C |
| Example 25 | 8.6 | 0.0 | 0.0 | 8.2 | 0.0 | 16.4 | 0.4 | Amorphous | $5.03 \times 10^{-4}$ | - | - | - |
| Example 26 | 10.1 | 0.0 | 1.6 | 6.4 | 0.0 | 16.1 | 0.4 | Amorphous | $3.56 \times 10^{-4}$ | - | $3.57 \times 10^{-5}$ | - |
| Comparative Example 1 | 8.3 | 0.0 | 0.0 | 8.3 | 0.0 | 16.7 | 0.0 | Amorphous | $1.87 \times 10^{-4}$ | $6.67 \times 10^{-7}$ | $3.85 \times 10^{-7}$ | Out of lower limit of measurement |
| Comparative Example 2 | 8.8 | 0.0 | 0.0 | 8.8 | 0.0 | 15.9 | 0.0 | Amorphous | $1.25 \times 10^{-4}$ | $4.64 \times 10^{-7}$ | - | - |

From Table 1, it can be seen that a solid electrolyte material that is amorphous including lithium, tantalum, phosphorus, and oxygen as constituent elements and including at least one element selected from boron, niobium, silicon, and bismuth as a constituent element can allow a sintered body having a sufficient total conductivity to be obtained even when fired at a low temperature of 900°C or less.

[Table 2]

| | Ratio of numbers of atoms (atomic %) | | | | | | State of solid electrolyte material | Total conductivity (S•cm$^{-1}$) | | | |
|---|---|---|---|---|---|---|---|---|---|---|---|
| | Li | B | P | Nb | Ta | Bi | | 850°C | 750°C | 700°C | 650°C |
| Example 3 | 12.2 | 2.5 | 7.2 | 0.0 | 14.3 | 0.0 | Amorphous | $7.59 \times 10^{-4}$ | $2.36 \times 10^{-4}$ | $2.64 \times 10^{-4}$ | $3.62 \times 10^{-5}$ |
| Example 27 | 12.2 | 2.5 | 7.2 | 0.0 | 14.3 | 0.0 | Amorphous | - | - | $1.54 \times 10^{-4}$ | - |
| Comparative Example 3 | 12.2 | 2.5 | 7.2 | 0.0 | 14.3 | 0.0 | Crystalline | $2.31 \times 10^{-6}$ | - | $1.75 \times 10^{-9}$ | - |

From Table 2, it can be seen that even if solid electrolyte materials are the same in terms of including lithium, tantalum, phosphorus, and oxygen as constituent elements and including boron as a constituent element, the solid electrolyte material that is amorphous can allow a sintered body having a sufficient total conductivity to be obtained even when fired at a low temperature of 900°C or less.

**Claims**

1. A solid electrolyte material that is amorphous, comprising lithium, tantalum, phosphorus, and oxygen as constituent elements and comprising at least one element selected from boron, niobium, silicon, and bismuth as a constituent element.

2. The solid electrolyte material according to claim 1, wherein a content of the tantalum element is 10.6 to 16.6 atomic %.

3. The solid electrolyte material according to claim 1 or 2, wherein a content of the phosphorus element is 5.3 to 8.8 atomic %.

4. The solid electrolyte material according to any one of claims 1 to 3, wherein a content of the lithium element is 5.0 to 20.0 atomic %.

5. The solid electrolyte material according to any one of claims 1 to 4, wherein a content of the boron element is 0.1 to 5.0 atomic %.

6. The solid electrolyte material according to any one of claims 1 to 5, wherein a content of the niobium element is 0.1 to 5.0 atomic %.

7. The solid electrolyte material according to any one of claims 1 to 6, wherein a content of the silicon element is 0.1 to 5.0 atomic %.

8. The solid electrolyte material according to any one of claims 1 to 7, wherein a content of the bismuth element is 0.1 to 5.0 atomic %.

9. The solid electrolyte material according to any one of claims 1 to 8, wherein the solid electrolyte material comprises one or more elements selected from the group consisting of Zr, Ga, Sn, Hf, W, Mo, Al, and Ge as a constituent element.

10. A solid electrolyte obtained by using the solid electrolyte material according to any one of claims 1 to 9.

11. A solid electrolyte which is a sintered body of the solid electrolyte material according to any one of claims 1 to 9.

**12.** A method for producing the solid electrolyte according to claim 10 or 11, comprising a step of firing the solid electrolyte material according to any one of claims 1 to 9 at 500 to 900°C.

**13.** An all-solid-state battery, comprising:

a positive electrode having a positive electrode active material;
a negative electrode having a negative electrode active material; and
a solid electrolyte layer between the positive electrode and the negative electrode, wherein
the solid electrolyte layer comprises the solid electrolyte according to claim 10 or 11.

**14.** The all-solid-state battery according to claim 13, wherein

the positive electrode active material comprises one or more compounds selected from the group consisting of $LiM3PO_4$, $LiM5VO_4$, $Li_2M6P_2O_7$, $LiVP_2O_7$, $Li_{x7}V_{y7}M7_{z7}$, $Li_{1+x8}Al_{x8}M8_{2-x8}(PO_4)_3$, $LiNi_{1/3}Co_{1/3}Mn_{1/3}O_2$, $LiCoO_2$, $LiNiO_2$, $LiMn_2O_4$, $Li_2CoP_2O_7$, $Li_3V_2(PO_4)_3$, $Li_3Fe_2(PO_4)_3$, $LiNi_{0.5}Mn_{1.5}O_4$, and $Li_4Ti_5O_{12}$,
M3 is one or more elements selected from the group consisting of Mn, Co, Ni, Fe, Al, Ti, and V, or two elements V and O, M5 is one or more elements selected from the group consisting of Fe, Mn, Co, Ni, Al, and Ti,
M6 is one or more elements selected from the group consisting of Fe, Mn, Co, Ni, Al, Ti, and V, or two elements V and O, $2 \leq x7 \leq 4$, $1 \leq y7 \leq 3$, $0 \leq z7 \leq 1$, $1 \leq y7 + z7 \leq 3$, and M7 is one or more elements selected from the group consisting of Ti, Ge, Al, Ga, and Zr, and
$0 \leq x8 \leq 0.8$, and M8 is one or more elements selected from the group consisting of Ti and Ge.

**15.** The all-solid-state battery according to claim 13 or 14, wherein

the negative electrode active material comprises one or more compounds selected from the group consisting of $LiM3PO_4$, $LiM5VO_4$, $Li_2M6P_2O_7$, $LiVP_2O_7$, $Li_{x7}V_{y7}M7_{z7}$, $Li_{1+x8}Al_{x8}M8_{2-x8}(PO_4)_3$, $(Li_{3-a9 \times 9+(5-b9)y9}M9_{x9})(V_{1-y9}M10_{y9})O_4$, $LiNb_2O_7$, $Li_4Ti_5O_{12}$, $Li_4Ti_5PO_{12}$, $TiO_2$, LiSi, and graphite,
M3 is one or more elements selected from the group consisting of Mn, Co, Ni, Fe, Al, Ti, and V, or two elements V and O, M5 is one or more elements selected from the group consisting of Fe, Mn, Co, Ni, Al, and Ti,
M6 is one or more elements selected from the group consisting of Fe, Mn, Co, Ni, Al, Ti, and V, or two elements V and O, $2 \leq x7 \leq 4$, $1 \leq y7 \leq 3$, $0 \leq z7 \leq 1$, $1 \leq y7 + z7 \leq 3$, and M7 is one or more elements selected from the group consisting of Ti, Ge, Al, Ga, and Zr,
$0 \leq x8 \leq 0.8$, and M8 is one or more elements selected from the group consisting of Ti and Ge, and
M9 is one or more elements selected from the group consisting of Mg, Al, Ga, and Zn, M10 is one or more elements selected from the group consisting of Zn, Al, Ga, Si, Ge, P, and Ti, $0 \leq x9 \leq 1.0$, $0 \leq y9 \leq 0.6$, a9 is an average valence of M9, and b9 is an average valence of M10.

**16.** The all-solid-state battery according to any one of claims 13 to 15, wherein the positive electrode and the negative electrode comprise the solid electrolyte according to claim 10 or 11.

[Fig. 1]

[Fig. 2]

[Fig. 3]

[Fig. 4]

[Fig. 5]

[Fig. 6]

<table>
<tr><td colspan="2" align="center">**INTERNATIONAL SEARCH REPORT**</td><td colspan="2">International application No.<br>PCT/JP2021/021833</td></tr>
</table>

**A. CLASSIFICATION OF SUBJECT MATTER**

Int.Cl. H01M4/40(2006.01)i, H01M4/48(2010.01)i, H01M4/485(2010.01)i,
H01M4/505(2010.01)i, H01M4/525(2010.01)i, H01M4/58(2010.01)i,
H01M4/587(2010.01)i, H01M4/62(2006.01)i, H01M10/052(2010.01)i,
H01M10/0562(2010.01)i, H01B1/06(2006.01)i, H01B1/08(2006.01)i
FI: H01B1/06A, H01M10/052, H01M4/40, H01M4/48, H01M4/485, H01M4/505,
H01M4/525, H01M4/58, H01M4/587, H01M4/62Z, H01B1/08, H01M10/0562

According to International Patent Classification (IPC) or to both national classification and IPC

**B. FIELDS SEARCHED**

Minimum documentation searched (classification system followed by classification symbols)
Int.Cl. H01M4/40, H01M4/48, H01M4/485, H01M4/505, H01M4/525, H01M4/58,
H01M4/587, H01M4/62, H01M10/052, H01M10/0562, H01B1/06, H01B1/08

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2020/036290 A1 (AJOU UNIVERSITY INDUSTRY-ACADEMIC COOPERATION FOUNDATION) 20 February 2020 (2020-02-20), paragraphs [40]-[42], [57] | 1, 9-13, 16<br>2-8, 14-15 |
| A | JP 2016-119257 A (HITACHI, LTD.), claims | 1-16 |

☐ Further documents are listed in the continuation of Box C.  ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>  05 July 2021 | Date of mailing of the international search report<br>  13 July 2021 |
|---|---|
| Name and mailing address of the ISA/<br>  Japan Patent Office<br>  3-4-3, Kasumigaseki, Chiyoda-ku,<br>  Tokyo 100-8915, Japan | Authorized officer<br><br>Telephone No. |

Form PCT/ISA/210 (second sheet) (January 2015)

INTERNATIONAL SEARCH REPORT
Information on patent family members

International application No.

PCT/JP2021/021833

| WO 2020/036290 A1 | 20 February 2020 | EP 3840100 A1 |
| | | paragraphs [0030]-[0033], [0049] |
| | | CN 112805861 A |
| | | KR 10-2020-0020172 A |
| | | |
| JP 2016-119257 A | | US 2016/0181657 A1 |
| | | claims |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. KIM et al.** *J. Mater. Chem. A,* 2018, vol. 6, 22478-22482